# EUROPÄISCHE PATENTSCHRIFT

(11) **EP 1 741 970 B1**
(45) Veröffentlichungstag und Bekanntmachung des Hinweises auf die Patenterteilung: **19.03.2008**
(21) Anmeldenummer: 06005935.9
(22) Anmeldetag: 23.03.2006
(51) Int. Cl.: F16N 7/38, F27B 7/20

(54) **Sprühgerät für Schmierstoffe oder dgl. Fluid**
Spraying apparatus for lubricant or similar fluid.
Appareil de pulvérisation pour lubricant ou fluide analogue

(30) Priorität: 30.06.2005 DE 202005009892 U
(43) Veröffentlichungstag der Anmeldung: 10.01.2007
(73) Patentinhaber: Lincoln GmbH, 69190 Walldorf (DE)
(72) Erfinder: Schubert, Siegfried, 69434 Hirschhorn (DE)
(74) Vertreter: KEIL & SCHAAFHAUSEN Patentanwälte

(56) Entgegenhaltungen:
- EP-A- 0 578 405
- WO-A-01/11181
- DE-A1- 3 129 048
- DE-A1- 3 718 571
- DE-A1- 4 406 099
- FR-A- 2 613 032
- US-A- 4 904 505
- US-B1- 6 405 810
- PATENT ABSTRACTS OF JAPAN Bd. 1999, Nr. 13, 30. November 1999 (1999-11-30) & JP 11 223298 A (NANSHIN KIKO KK), 17. August 1999 (1999-08-17)

## Beschreibung

Die Erfindung bezieht sich auf ein Gerät zum Besprühen von engen Zwischenräumen, z. B. von Innenbahnen von Laufringen mit loser Laufringbefestigung an Drehöfen, wie Zementtrommeln, mit Schmierstoffen, wie Druckölen, oder für vergleichbare Anwendungen von zu versprühenden Fluiden.

Beispielsweise an Laufringen mit loser Laufringbefestigung muss nach Herstellerangaben die Laufringinnenbahn mit einem sprühbaren Schmiermittel täglich geschmiert werden. Bislang wurde dies mit großem Aufwand und unter schwierigen Bedingungen (Temperatur) z. B. mit Handspritzen in Kombination mit Lanzen durchgeführt. Verwendet wurden in der Regel Druckpumpen, die normalerweise im Gartenbau Anwendung finden. Nachteilig hierbei ist, dass mit solchen Pumpen nur dünnflüssige Schmiermittel verpumpt werden können. Ein noch größerer Nachteil ist jedoch die hohe Unfallgefahr bei dieser manuellen Schmiermethode aufgrund der hohen Temperaturen und aufgrund der Drehbewegung des Ofens, welche Schwindel beim Wartungspersonal verursacht. Weiterhin ist eine Dosierung und punktgenaue Aufbringung des Schmierstoffs mit der Hand nur sehr begrenzt möglich, zumal ein Drehofen im Betrieb und speziell während der Aufheizphase um einige Zentimeter "wandert". Ähnliche Probleme können auch beim Versprühen anderer Fluide bestehen.

Aus der DE 31 29 048 A1 ist eine Zentralschmieranlage zum Schmieren von beispielsweise Ketten bekannt, bei welcher Schmierstoff mit einer Pumpe einem Druckspeicher zugeführt wird und über mittels Magnetventilen gesteuerte Schmierstoffverteiler auf die zu schmierende Kette gesprüht wird.

Die Patentschrift US 4,904,505 beschreibt eine Vorrichtung und ein Verfahren zum Aufbringen eines dünnen Schmiermittelfilms auf eine Oberfläche einer sich mit hoher Geschwindigkeit bewegenden Metallblechbahn. Danach ist vorgesehen, Schmiermittel mittels einer Pumpe in einen Druckspeicher zu fördern und mittels Solenoid-gesteuerten Sprühdüsen auf die Blechbahn zu sprühen.

Aufgabe der vorliegenden Erfindung ist es, ein verbessertes Sprühgerät der eingangs genannten Art vorzuschlagenwelches unter schwierigen Umgebungsbedingungen einsetzbar ist sowie den Schmierstoff oder dgl. Fluid zuverlässig weit und zielgenau versprüht. Statt von Fluid allgemein wird im Folgenden nur von Schmierstoff gesprochen, ohne dadurch den Schutzbereich beschränken zu wollen.

Diese Aufgabe wird erfindungsgemäß dadurch gelöst, dass das Gerät ein Hydraulikaggregat aufweist, mit wenigstens einem Druckspeicher für die Aufnahme des Schmierstoffs unter erhöhtem Druck, wenigstens einer Sprühdüse, einer Pumpe zur Förderung von Schmierstoff von einem Schmierstofftank zu dem wenigstens einen Druckspeicher und mit wenigstens einem mittels elektrischen Impulses öffenbaren Schmierstoffabgabeventil in einer Verbindungsleitung zwischen dem wenigstens einem Druckspeicher und der wenigstens einen Sprühdüse, wobei zwischen der Pumpe und dem wenigstens einen Druckspeicher ein Speichernachladeventil eingeschaltet ist.

Ein derartiges Gerät ist selbsttätig einsetzbar. Es wird mit einfachen Mitteln erreicht, dass Zwischenräume in einem Abstand von bis zu einem Meter nahezu waagrecht und positionsgenau besprüht werden können, wobei der Startimpuls für die Schmierstoffabgabe über einen elektrischen Sensor ausgelöst werden kann.

Ein Speichernachladeventil zwischen der Pumpe und dem wenigstens einen Druckspeicher sorgt dafür, dass selbsttätig eine Nachspeisung des Druckspeichers erfolgt, so dass für eine ständige Bereithaltung des Schmierstoffes unter dem erforderlichen Betriebsdruck gewährleistet ist.

Ein zwischen dem wenigstens einen Druckspeicher und dem Schmierstoffabgabeventil und/oder zwischen dem Speichernachladeventil und dem wenigstens einen Druckspeicher eingeschaltetes Drosselrückschlagventil dient als ein Faktor der Einstellung der Dosiermenge. Weitere Faktoren hierfür sind die Schaltzeit des Schmierstoffabgabeventils sowie die Auswahl der Sprühdüse.

Der Druck in dem Druckspeicher und/oder der Pumpendruck können/kann mit je einem Fülldruckmesser z. B. optisch überwacht werden, während ein dem wenigstens einen Druckspeicher zugeordnetes Sicherheitsventil unzulässige Überdrucke vermeidet.

Gemäß einem weiteren Erfindungsmerkmal kann dem wenigstens einen Druckspeicher und/oder dem wenigstens einen Schmierstoffabgabeventil eine Druckentlastungseinrichtung zugeordnet sein. Diese wird z. B. dann betätigt, wenn ein Eingriff in die Anlage erforderlich ist.

Für einen möglichst gleichmäßigen Druck in der Anlage wird gesorgt, wenn die Pumpe als Zahnradkolbenpumpe ausgebildet ist.

Der wenigstens eine Druckspeicher ist vorteilhafterweise ein Membranspeicher.

Für das wenigstens eine Schmierstoffabgabeventil wird ein 2/2-Wege-Sitz-Magnetventil vorgeschlagen.

Zur Anpassung an unterschiedliche Dosiermengen kann entweder die wenigstens eine Sprühdüse selbst gegen eine andere austauschbar oder die Sprühdüse mit austauschbarer Blende ausgestattet sein.

Die Druckentlastungseinrichtung kann als Kugelhahn und/oder Magnetventil ausgebildet sein.

Fernerhin wird vorgeschlagen, dass Hydraulikaggregat vorzugsweise als komplette Einheit oder wenigstens ein Teil davon auf bzw. an dem Schmierstofftank selbst anzuordnen.

Eine vorteilhafte Betriebsweise ergibt sich dann, wenn der Betriebsdruck des Schmierstoffs auf einen vorgegebenen Wert von z. B. etwa 90 bar und der Speicherfülldruck auf einen vorgegebenen Wert von z. B. etwa 60 bar einstellbar ist.

Ferner ist vorzugsweise vorgesehen, dass bei einem Druckabfall in dem Druckspeicher auf einen Wert unterhalb eines vorgegebenen Wertes von z. B. etwa 85 bar die Pumpe zum Nachfördern von Schmierstoff anschaltbar ist.
Der Schmierstofftank ist bspw. außer mit einer Einfüll- und Belüftungseinrichtung mit einem Niveauschalter für den Schmierstoffvorrat ausgerüstet.
Weitere Ziele, Merkmale, Vorteile und Anwendungsmöglichkeiten der Erfindung ergeben sich aus der nachfolgenden Beschreibung von Ausführungsbeispielen anhand der Zeichnung.

Es zeigen:
- Fig. 1: einen Hydraulikplan des Hydraulikaggregats bei einem erfindungsgemäßen Sprühgerät für Schmierstoffe gemäß einer Ausführungsart, und
- Fig. 2: einen Hydraulikplan ähnlich Fig. 1 für eine andere Ausführungsart der Erfindung.

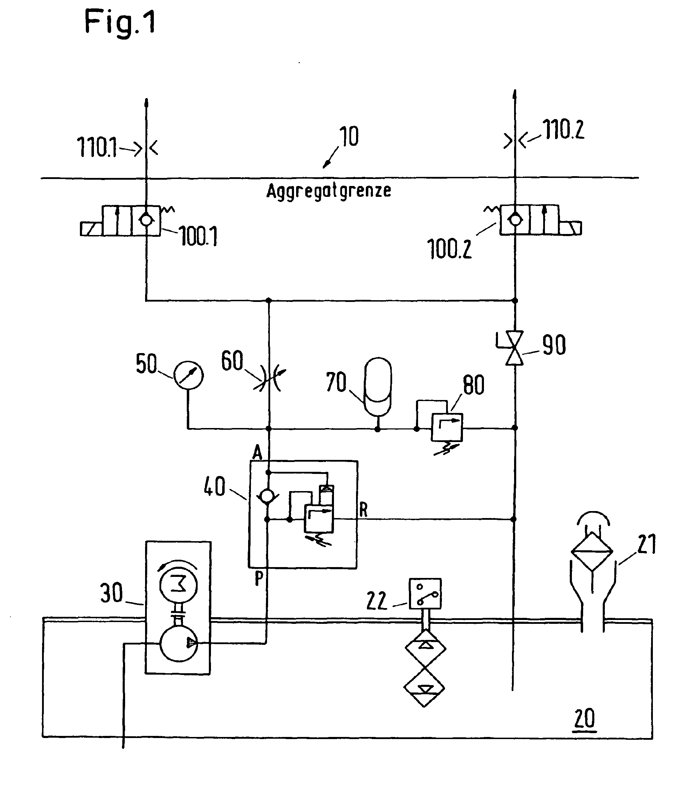

Das in Fig. 1 dargestellte Hydraulikaggregat 10 ist von der Bereitstellung des Schmierstoffs bis zu den Verbraucheranschlüssen als vollständige Einheit auf dem Deckel eines Schmierstofftanks 20 montiert. Als Energiequelle dient z. B. eine als Zahnradkolbenpumpe mit konstanter Fördermenge ausgebildete Pumpe 30, welche sich unterhalb des Schmierstofftankdeckels befindet. Die gesamte Ventilsteuerung des Hydraulikaggregats 10 mit einem Druckspeicher 70 und der Pumpensteuerung ist auf dem Tankdeckel installiert. Die Druckeinstellung kann so erfolgen, dass der Primärdruck bei etwa 90 bar und der Speicherfülldruck bei 60 bar liegt. Zur Überwachung der eingestellten Pumpenleistung ist als optische Kontrolle ein Fülldruckmesser (Manometer) 50 installiert. Der Druckspeicher 70 sorgt somit für ständige Bereithaltung des Schmierstoffes im Betriebszustand. Zur Überdrucksicherung dient ein Sicherheitsventil (Druckbegrenzungsventil) 80. Ferner ist in der Verbindungsleitung zwischen Pumpe 30 und Druckspeicher 70 ein Speichernachladeventil 40 vorgesehen, welches die Bereitstellung des Schmierstoffes in dem Druckspeicher 70 unter dem gewünschten Speicherfülldruck gewährleistet. Die Schmierstoffabgabe erfolgt z.B. durch Auslösen eines Sensors über ein Drosselrückschlagventil 60 durch die Schmierstoffabgabeventile 100.1, 100.2 aus den Sprühdüsen 110.1 und 110.2.

Ist bspw. ein Druckabfall auf ca. 85 bar erreicht, so schaltet die Pumpe 30 selbsttätig ein. Mit Hilfe der z. B. als Kugelhahn ausgebildeten Druckentlastungseinrichtung 90 kann das System, z. B. wenn ein Eingriff erforderlich ist, druckentlastet werden.

Bei längeren Stillstandszeiten ist es empfehlenswert, die Pumpe 30 abzuschalten. Der erneute Pumpenstart sollte ca. 5 Minuten vor Ablauf der Pausenzeit erfolgen.

Der Schmierstofftank 20 ist in herkömmlicherweise mit einer Einfüll- und Belüftungseinrichtung 21 und einem Niveauschalter 22 ausgerüstet.

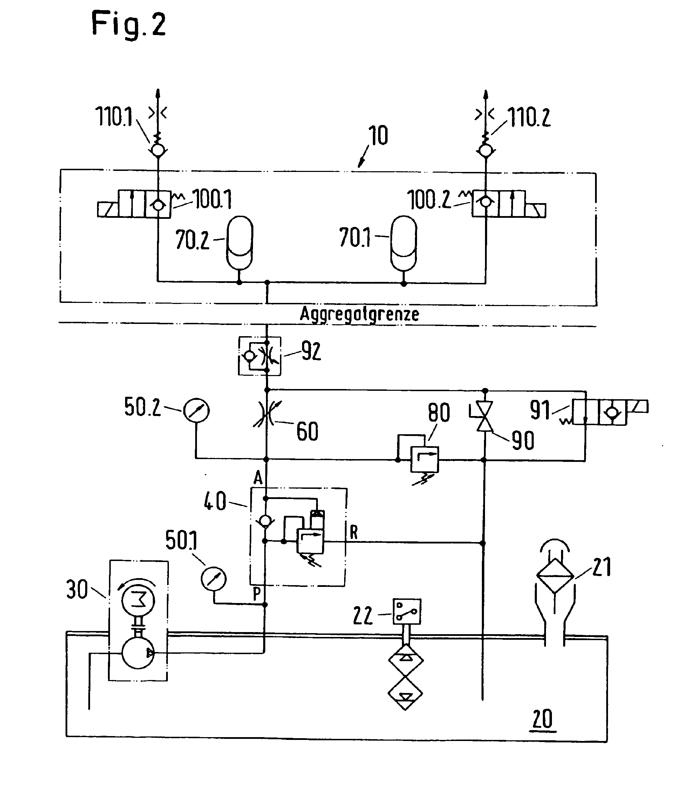

Bei dem Ausführungsbeispiel von Fig. 2 ist der Hydraulikplan gegenüber dem von Fig. 1 abgeändert, indem ein Teilaggregat mit zwei den jeweiligen Sprühdüsen 110.1 und 110.2 zugeordneten Druckspeichern 70.1 und 70.2 gesondert von dem auf dem Schmierstofftank 20 befestigten übrigen Teilaggregat vorgesehen ist.

Die Druckspeicher 70.1, 70.2 sind dabei nicht wie der Druckspeicher 70 nach Fig. 1 zwischen Drosselrückschlagventil 60 und Sicherheitsventil 80 angeschlossen, sondern dem Drosselrückschlagventil 60 nachgeordnet. Die Drucke werden mittels Manometern 50.1 und 50.2 zwischen Pumpe 30 und Speichernachladeventil 40 sowie zwischen Speichernachladeventil 40 und Drosselrückschlagventil 60 überwacht. Die als Kugelhahn ausgebildete Druckentlastungseinrichtung 90 ist durch eine als Magnetventil ausgebildete Druckentlastungseinrichtung 91 ergänzt. Die Funktionsweise des Hydraulikaggregats 10 nach Fig. 2 ist dem nach Fig. 1 im übrigen ähnlich.

### Bezugszeichenliste

- 10: Hydraulikaggregat
- 20: Schmierstofftank
- 21: Einfüll- und Belüftungseinrichtung
- 22: Niveauschalter
- 30: Pumpe
- 40: Speichernachladeventil
- 50; 50.1, 50.2: Fülldruckmesser (Manometer)
- 60: Drosselrückschlagventil
- 70; 70.1, 70.2: Druckspeicher
- 80: Sicherheitsventil (Druckbegrenzungsventil)
- 90: Druckentlastungseinrichtung (Kugelhahn)
- 91: Druckentlastungseinrichtung (Magnetventil)
- 100.1: Schmierstoffabgabeventil
- 100.2: Schmierstoffabgabeventil
- 110.1: Sprühdüse
- 110.2: Sprühdüse

## Patentansprüche

1. Gerät zum Besprühen z. B. von engen Zwischenräumen, z. B. von Innenbahnen von Laufringen mit loser Laufringbefestigung an Drehöfen, wie Zementtrommeln, mit Schmierstoffen, wie Druckölen, oder für vergleichbare Anwendungen von Fluiden mit einem Hydraulikaggregat (10) mit wenigstens einem Druckspeicher (70; 70.1, 70.2) für die Aufnahme des Schmierstoffs unter erhöhtem Druck, wenigstens einer Sprühdüse (110.1, 110.2), einer Pumpe (30) zur Förderung von Schmierstoff von einem Schmierstofftank (20) zu dem wenigstens einen Druckspeicher (70; 70.1, 70.2) und mit wenigstens einem mittels elektrischen Startimpulses öffenbaren Schmierstoffabgabeventil (100.1, 100.2) in einer Verbindungsleitung zwischen dem wenigstens einen Druckspeicher (70; 70.1, 70.2) und der wenigstens einen Sprühdüse (110.1, 110.2), **dadurch gekennzeichnet, dass** zwischen der Pumpe (30) und dem wenigstens einen Druckspeicher (70; 70.1, 70.2) ein Speichernachladeventil (40) eingeschaltet ist.

2. Gerät nach Anspruch 1, **dadurch gekennzeichnet, dass** zwischen dem wenigstens einen Druckspeicher (70; 70.1, 70.2) und dem Schmierstoffabgabeventil (100.1, 100.2) und/oder zwischen dem Speichernachladeventil (40) und dem wenigstens einen Druckspeicher (70; 70.1, 70.2) ein Drosselrückschlagventil (60) eingeschaltet ist.

3. Gerät nach Anspruch 1 oder 2, **dadurch gekennzeichnet, dass** zwischen dem wenigstens einen Druckspeicher (70; 70.1, 70.2) und dem Speichernachladeventil (40) und/oder zwischen der Pumpe (30) und dem Speichernachladeventil (40) wenigstens ein Fülldruckmesser (50; 50.1, 50.2) eingeschaltet ist.

4. Gerät nach einem der vorhergehenden Ansprüche, **dadurch gekennzeichnet, dass** dem wenigstens einen Druckspeicher (70: 70.1, 70.2) ein Sicherheitsventil (80) zugeordnet ist.

5. Gerät nach einem der vorhergehenden Ansprüche, **dadurch gekennzeichnet, dass** dem wenigstens einen Druckspeicher (70; 70.1, 70.2) und/oder dem wenigstens einen Schmierstoffabgabeventil (100.1, 100.2) eine Druckentlastungseinrichtung (90, 91) zugeordnet ist.

6. Gerät nach einem der vorhergehenden Ansprüche, **dadurch gekennzeichnet, dass** die Pumpe (20) als Zahnradkolbenpumpe ausgebildet ist.

7. Gerät nach einem der vorhergehenden Ansprüche, **dadurch gekennzeichnet, dass** der wenigstens eine Druckspeicher (70; 70.1, 70.2) als Membranspeicher ausgebildet ist.

8. Gerät nach einem der vorhergehenden Ansprüche, **dadurch gekennzeichnet, dass** das wenigstens eine Schmierstoffabgabeventil (100.1, 100.2) als 2/2-Wegesitz-Magnetventil ausgebildet ist.

9. Gerät nach einem der vorhergehenden Ansprüche, **dadurch gekennzeichnet, dass** die wenigstens eine Sprühdüse (110.1, 110.2) entweder selbst austauschbar oder mit austauschbarer Blende ausgestattet ist.

10. Gerät nach einem der Ansprüche 5 bis 9, **dadurch gekennzeichnet, dass** die Druckentlastungseinrichtung (90, 91) als Kugelhahn, Magnetventil und/oder dgl. ausgebildet ist.

11. Gerät nach einem der vorhergehenden Ansprüche, **dadurch gekennzeichnet, dass** das Hydraulikaggregat (10), vorzugsweise als komplette Einheit, auf bzw. an dem Schmierstofftank (20) angeordnet ist.

12. Gerät nach einem der vorhergehenden Ansprüche, **dadurch gekennzeichnet, dass** der Primärdruck des Schmierstoffs auf einen vorgegebenen Wert von z.B. etwa 90 bar und der Speicherfülldruck auf einen vorgegebenen Wert von z.B. etwa 60 bar einstellbar ist.

13. Gerät nach einem der vorhergehenden Ansprüche, **dadurch gekennzeichnet, dass** bei einem Druckabfall in dem wenigstens einen Druckspeicher (70; 70.1, 70.2) auf einen Wert unterhalb eines vorgegebenen Wertes von z.B. etwa 85 bar die Pumpe (30) zum Nachfördern von Schmierstoff selbsttätig anschaltbar ist.

14. Gerät nach einem der vorhergehenden Ansprüche, **dadurch gekennzeichnet, dass** dem Schmierstofftank (20) eine Einfüll- und Belüftungseinrichtung (21) und/oder ein Niveauschalter (22) zugeordnet sind/ist.

## Claims

1. An apparatus for the spraying of confined spaces for example - such as the inner tracks of races with loose race attachment to rotary furnaces, such as cement drums - with lubricants, such as pressure oils, or for comparable uses of fluids, with a hydraulic unit (10) comprising: at least one pressure accumulator (70; 70.1, 70.2) for holding the lubricant under increased pressure; at least one spray nozzle (110.1, 110.2); a pump (30) for conveying lubricant from a lubricant tank (20) to the at least one pressure accumulator (70; 70.1, 70.2); and at least one lubricant delivery valve (100.1, 100.2) which is opened by means of electrical starting pulses and is located in a connecting line between the at least one pressure accumulator (70; 70.1, 70.2) and the at least one spray nozzle (110.1, 110.2), **characterized in that** an accumulator recharging valve (40) is connected between the pump (30) and the at least one pressure accumulator (70; 70.1, 70.2).

2. An apparatus according to Claim 1, **characterized in that** a one-way restrictor (60) is connected between the at least one pressure accumulator (70; 70.1, 70.2) and the lubricant delivery valve (100.1, 100.2) and/or between the accumulator recharging valve (40) and the at least one pressure accumulator (70; 70.1, 70.2).

3. An apparatus according to Claim 1 or 2, **characterized in that** at least one filling-pressure gauge (50; 50.1, 50.2) is connected between the at least one pressure accumulator (70; 70.1, 70.2) and the accumulator recharging valve (40) and/or between the pump (30) and the accumulator recharging valve (40).

4. An apparatus according to one of the preceding claims, **characterized in that** a safety valve (80) is associated with the at least one pressure accumulator (70; 70.1, 70.2).

5. An apparatus according to one of the preceding claims, **characterized in that** pressure relief means (90, 91) are associated with the at least one pressure accumulator (70; 70.1, 70.2) and/or the at least one lubricant delivery valve (100.1, 100.2).

6. An apparatus according to one of the preceding claims, **characterized in that** the pump (20) takes the form of a geared piston pump.

7. An apparatus according to one of the preceding claims, **characterized in that** the at least one pressure accumulator (70; 70.1, 70.2) takes the form of a diaphragm accumulator.

8. An apparatus according to one of the preceding claims, **characterized in that** the at least one lubricant delivery valve (100.1, 100.2) takes the form of a 2/2 directional seat solenoid valve.

9. An apparatus according to one of the preceding claims, **characterized in that** the at least one spray nozzle (110.1, 110.2) is either itself replaceable or is fitted with a replaceable orifice plate.

10. An apparatus according to one of Claims 5 to 9, **characterized in that** the pressure relief means (90, 91) takes the form of a ball valve, solenoid valve and/or the like.

11. An apparatus according to one of the preceding claims, **characterized in that** the hydraulic unit (10) is disposed, preferably as a complete unit, on or next to the lubricant tank (20).

12. An apparatus according to one of the preceding claims, **characterized in that** the primary pressure of the lubricant can be set at a predetermined value of approximately 90 bars for example, and the accumulator filling pressure can be set at a predetermined value of approximately 60 bars for example.

13. An apparatus according to one of the preceding claims, **characterized in that**, with a drop in pressure in the at least one pressure accumulator (70; 70.1, 70.2) to a value below a predetermined value of approximately 85 bars for example, the pump (30) automatically switches on for subsequent delivery of lubricant.

14. An apparatus according to one of the preceding claims, **characterized in that** filling and venting means (21) and/or a level switch (22) are associated with the lubricant tank (20).

## Revendications

1. Appareil pour pulvériser avec des lubrifiants, tels que des huiles sous pression, par exemple des interstices étroits, par exemple de voies de roulement internes de bagues de roulement ayant une fixation de bague de roulement libre sur des fours rotatifs, tels que des tambours à ciment, ou pour des utilisations comparables de fluides, avec un agrégat hydraulique (10) comportant au moins un accumulateur de pression (70 ; 70.1, 70.2) permettant de recevoir le lubrifiant sous une pression importante, au moins une buse de pulvérisation (110.1, 110.2), une pompe (30) permettant d'acheminer le lubrifiant du réservoir de lubrifiant (20) jusqu'au au moins un accumulateur de pression (70 ; 70.1, 70.2) et comportant au moins un clapet de déchargement de lubrifiant (100.1, 100.2) pouvant s'ouvrir à l'aide d'une impulsion de départ électrique et placé dans une conduite de liaison entre le au moins un accumulateur de pression (70 ; 70.1, 70.2) et la au moins, une buse de pulvérisation (110.1, 110.2) **caractérisé en ce qu'**un clapet de rechargement d'accumulateur (40) est intégré entre la pompe (30) et le au moins un accumulateur de pression (70 ; 70.1, 70.2).

2. Appareil selon la revendication 1, **caractérisé en ce que**, un clapet anti-retour avec étranglement (60) est intégré entre le au moins un accumulateur de pression (70 ; 70.1, 70.2) et le clapet de déchargement de lubrifiant (100.1, 100.2) et/ou entre le clapet de rechargement d'accumulateur (40) et le au moins un accumulateur de pression (70 ; 70.1, 70.2).

3. Appareil selon la revendication 1 ou 2, **caractérisé en ce qu'**au moins un mesureur de pression de remplissage (50 ; 50.1, 50.2) est intégré entre le au moins un accumulateur de pression (70 ; 70.1, 70.2) et le clapet de rechargement d'accumulateur (40) et/ou entre la pompe (30) et le clapet de rechargement d'accumulateur (40).

4. Appareil selon l'une des revendications précédentes, **caractérisé en ce qu'**un clapet de sécurité (80) est affecté au au moins un accumulateur de pression (70 ; 70.1, 70.2).

5. Appareil selon l'une des revendications précédentes, **caractérisé en ce que**, un dispositif de décompression (90, 91) est affecté au au moins un accumulateur de pression (70; 70.1, 70.2) et/ou au au moins un clapet de déchargement de lubrifiant (100.1, 100.2).

6. Appareil selon l'une des revendications précédentes, **caractérisé en ce que** la pompe (20) est configurée comme une pompe à piston à engrenage.

7. Appareil selon l'une des revendications précédentes, **caractérisé en ce que** le au moins un accumulateur de pression (70 ; 70.1, 70.2) est configuré sous la forme d'un accumulateur à membrane.

8. Appareil selon l'une des revendications précédentes, **caractérisé en ce que** le au moins un clapet de déchargement de lubrifiant (100.1, 100.2) est configuré sous la forme d'un clapet magnétique à 2/2 voies.

9. Appareil selon l'une des revendications précédentes, **caractérisé en ce que** la au moins une buse de pulvérisation (110.1, 110.2) soit est elle-même remplaçable soit est dotée d'un diaphragme qui peut être remplacé.

10. Appareil selon l'une des revendications 5 à 9, **caractérisé en ce que** le dispositif de décompression (90, 91) est configuré sous la forme d'un robinet à boisseau sphérique, d'un clapet magnétique et/ou similaire.

11. Appareil selon l'une des revendications précédentes, **caractérisé en ce que** l'agrégat hydraulique (10) est disposé, de préférence sous la forme d'une unité intégrale, au-dessus de ou sur le réservoir de lubrifiant (20).

12. Appareil selon l'une des revendications précédentes, **caractérisé en ce que** la pression primaire du lubrifiant peut être régulée à une valeur prédéfinie, par exemple d'environ 90 bars, et la pression de remplissage de l'accumulateur peut être régulée à une valeur prédéfinie par exemple d'environ 60 bars.

13. Appareil selon l'une des revendications précédentes, **caractérisé en ce que**, en cas de chute de la pression dans le au moins un accumulateur de pression (70 ; 70.1, 70.2) passant à une valeur inférieure à une valeur prédéfinie, par exemple d'environ 85 bars, la pompe (30) pour réalimenter le lubrifiant peut être activée automatiquement.

14. Appareil selon l'une des revendications précédentes, **caractérisé en ce qu'**un dispositif de remplissage et d'aération (21) et/ou un commutateur de niveau (22) sont/est affecté(s) au réservoir de lubrifiant (20).
